# EUROPEAN PATENT SPECIFICATION

(11) **EP 2 610 558 B1**
(45) Date of publication and mention of the grant of the patent: **27.09.2017**
(21) Application number: 12179961.3
(22) Date of filing: 09.08.2012
(51) Int. Cl.: F24D 3/18, F24D 19/10

(54) **HEAT PUMP SYSTEM AND CONTROL METHOD OF HEAT PUMP APPARATUS OF HEAT PUMP SYSTEM**
WÄRMEPUMPENSYSTEM UND STEUERUNGSMETHODE EINER WÄRMEPUMPE EINES WÄRMEPUMPENSYSTEMS
SYSTEME DE POMPE A CHALEUR ET PROCEDE DE COMMANDE D'UNE POMPE A CHALEUR D'UN SYSTEME DE PPOMPE A CHALEUR

(30) Priority: 29.12.2011 JP 2011290349
(43) Date of publication of application: 03.07.2013
(73) Proprietor: Mitsubishi Electric Corporation, Chiyoda-ku Tokyo 100-8310 (JP)
(72) Inventor: Matsuzawa, Koji, Tokyo, Tokyo 100-8310 (JP)
(74) Representative: Pfenning, Meinig & Partner mbB

(56) References cited:
- EP-A1- 1 777 471
- EP-A2- 2 400 229
- WO-A1-2009/087811
- WO-A1-2011/129248
- DE-A1- 2 702 489
- DE-A1-102007 025 121
- US-A1- 2004 144 528

## Description

### Technical Field

The present invention relates to a control technique of a compressor provided in a heat pump system. In particular, the present invention relates to a control technique of the compressor when its load is relatively low such as an intermediate season and so on.

### Background Art

A heat pump type heating system is a system in which a heat pump apparatus generates heated water, the heated water is supplied to a heating appliance such as a floor heating system, a panel heater, and so on, and heating operation is carried out by radiation heat of the heating appliance.

In the heat pump type heating system, the heat pump apparatus is controlled so that the temperature of the heated water (supply temperature) to be supplied to the heating appliance should become a target temperature which has been previously set.

In the heat pump type heating system, fully utilizing the feature of inverter control of the heat pump apparatus, it is important for promoting energy saving to continuously operate the heat pump apparatus as long as possible within a range not to degrade the indoor comfort.

However, when the performance of the heat pump apparatus is high with respect to the load, even if the heat pump apparatus is driven with the lowest possible performance, a supply temperature exceeds the target temperature at once. In this case, the following operation is repeated: when the supply temperature becomes higher than an upper restrictive temperature which is set a little higher than the target temperature, the operation of the heat pump apparatus temporarily stops, and when the supply temperature becomes a lower restrictive temperature which is set a little lower than the target temperature, the operation of the heat pump apparatus restarts again. Namely, the heat pump apparatus cannot operate continuously, which is not preferable to promote energy saving.

Patent Literature 1 describes that the number of stops of the heat pump apparatus is measured, when the number of stops is large, it is determined that the load is low, and the target temperature is decreased.

In Patent Literature 1, when the number of stops is large, the target temperature is lowered, thereby enabling the operation with decreasing the performance of the heat pump apparatus, which increases the operating efficiency. Further, by operating the heat pump apparatus with decreasing the performance, it takes time before the supply temperature reaches the target temperature, which reduces the number of stops of the heat pump apparatus.

### Citation List

### Patent Literature

Patent Literature 1: JP 2002 061 925 A

### Summary of Invention

### Technical Problem

The method described in Patent Literature 1 can be used when the performance of the heat pump apparatus can be decreased; while the method cannot be used when the heat pump apparatus is operated with suppressing the performance of heat pump apparatus as much as possible.

Further, Patent Literature 1 is on the premise of the air-conditioning operation by the forced convection system using a fan. Therefore, in Patent Literature 1, the feature of the heating operation of the natural convection system using the radiation heat of the heating appliance is not considered.

In the forced convection system, there is a feature that the correlation between the operation status of the heat pump apparatus and the indoor temperature is large. On the contrary to this, in the natural convection system, the correlation between the operation status of the heat pump apparatus and the indoor temperature is small. Namely, in the forced convection system, when the performance of heat pump apparatus is increased, the indoor temperature is increased at once, and when the performance is decreased, the indoor temperature is decreased at once. However, in the natural convection system, even if the performance of heat pump apparatus is changed and the supply temperature is changed, it takes time before the indoor temperature is changed.

The present invention aims, in the heat pump system using the heating appliance of the natural convection system, to reduce the number of stops of a compressor provided at the heat pump apparatus.

### Solution to Problem

According to the present invention, a heat pump system according to claim 1 and a method of a heat pump apparatus according to claim 4 are provided.

### Advantageous Effects of Invention

In the heat pump system related to the present invention, instead of setting the restrictive temperature a little higher than the target temperature, the restrictive temperature is set higher than usual based on a COP. By this operation, it takes time before the supply temperature exceeds the restrictive temperature; as a result, the number of stops of the compressor is reduced.

Here, since the heat pump system related to the present invention is on the premise of using the heating operation by the natural convection system, even if the supply temperature becomes a little higher than the target temperature, the indoor temperature is not increased at once. Therefore, the indoor comfort is not degraded.

### Brief Explanation of the Drawings

An embodiment of the present invention will become fully understood from the detailed description given hereinafter in conjunction with the accompanying drawings, in which:
Fig. 1 shows a configuration diagram of a heat pump system 200 related to the first embodiment.
Fig. 2 shows a configuration diagram of a control apparatus 100 related to the first embodiment.
Fig. 3 is a flowchart showing a flow of a control process of the control apparatus 100 related to the first embodiment.

### Description of Embodiments

In describing preferred embodiments illustrated in the drawings, specific terminology is employed for the sake of clarity However, the disclosure of the present invention is not intended to be limited to the specific terminology so selected, and it is to be understood that each specific element includes all technical equivalents that operate in a similar manner and achieve a similar result.

### Embodiment 1.

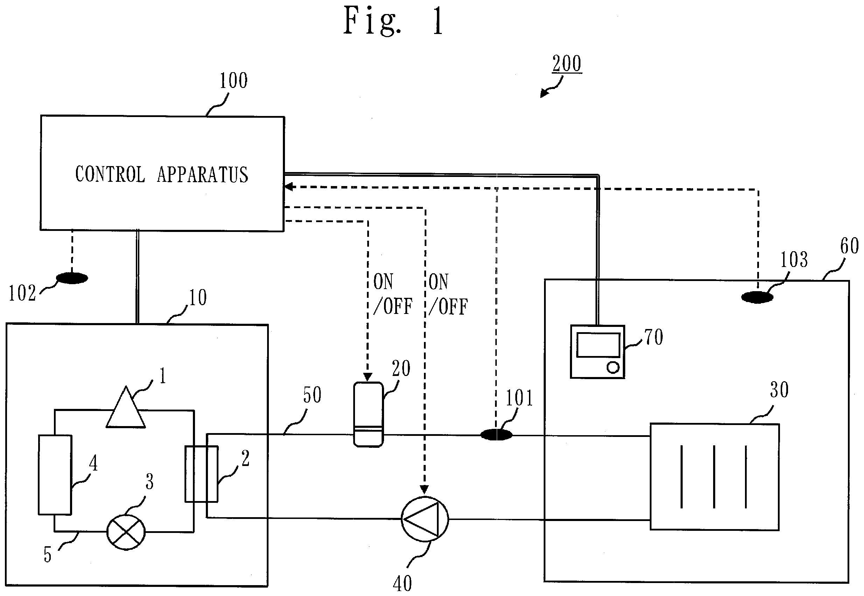

Fig. 1 shows a configuration diagram of a heat pump system 200 related to the first embodiment.

The heat pump system 200 includes a heat pump apparatus 10, an auxiliary heat source 20, a heating appliance 30 provided in an indoor space 60, and a pump 40, which are connected in order by a fluid piping 50. Here, the fluid piping 50 is connected to a heat exchanger 2 provided at the heat pump apparatus 10. Further, water (an example of fluid) flows inside the fluid piping 50.

In addition, a remote controller 70 is provided at the indoor space 60 at which the heating appliance 30 is installed for inputting a preset temperature and so on.

The heat pump apparatus 10 includes a heat pump cycle in which a compressor 1, a heat exchanger 2, an expansion mechanism 3, and a heat exchanger 4 are connected in order by a refrigerant piping 5. Refrigerant circulates within the heat pump cycle sequentially in an order of the compressor 1, the heat exchanger 2, the expansion mechanism 3, and the heat exchanger 4, and thereby the refrigerant absorbs heat from air, etc. at the heat exchanger 4 and discharges the heat to the water flowing through the fluid piping 50 at the heat exchanger 2. Namely, the water flowing through the fluid piping 50 is heated by the heat pump apparatus 10 to become heated water.

The auxiliary heat source 20 further heats the heated water heated by the heat pump apparatus 10. The auxiliary heat source 20 is, for instance, an electric heater and so on.

The heating appliance 30 discharges the heat of the heated water heated by the heat pump apparatus 10 and the auxiliary heat source 20 to the air in the indoor space 60. As a result, it becomes warm inside the indoor space 60, and the heated water is cooled to become cool water. The heating appliance 30 is such as a floor heating panel, a panel heater and so on which carry out heat exchange of the heated water with air by the natural convention system using the radiation heat.

The pump 40 circulates water within the fluid piping 50. Namely, as the pump 40 works, the water circulates from the heat pump apparatus 10, the auxiliary heat source 20, and the heating appliance 30, in order. Then, as discussed above, the operation is repeated in which the water is heated at the heat pump apparatus 10, further heated by the auxiliary heat source 20, and cooled by the heating appliance 30. With this operation, the indoor space 60 is heated.

Further, the heat pump system 200 includes temperature sensors 101 to 103.

The temperature sensor 101 measures the temperature of water supplied to the heating appliance 30 as a supply temperature. The temperature sensor 102 measures an outdoor temperature. The temperature sensor 103 measures the temperature of air of the indoor space 60 as an indoor temperature.

In addition, the heat pump system 200 includes a control apparatus 100 configured by micro-computer and so on.

The control apparatus 100 obtains the temperatures measured by the temperature sensors 101 to 103 and a preset temperature and so on inputted by the remote controller 70. The control apparatus 100 controls the heat pump apparatus 10 based on the obtained information, so that the temperature of the water supplied to the heating appliance 30 should become a target temperature. Further, the control apparatus 100 controls ON/OFF of the auxiliary heat source 20 and ON/OFF of the pump 40 based on the obtained information.

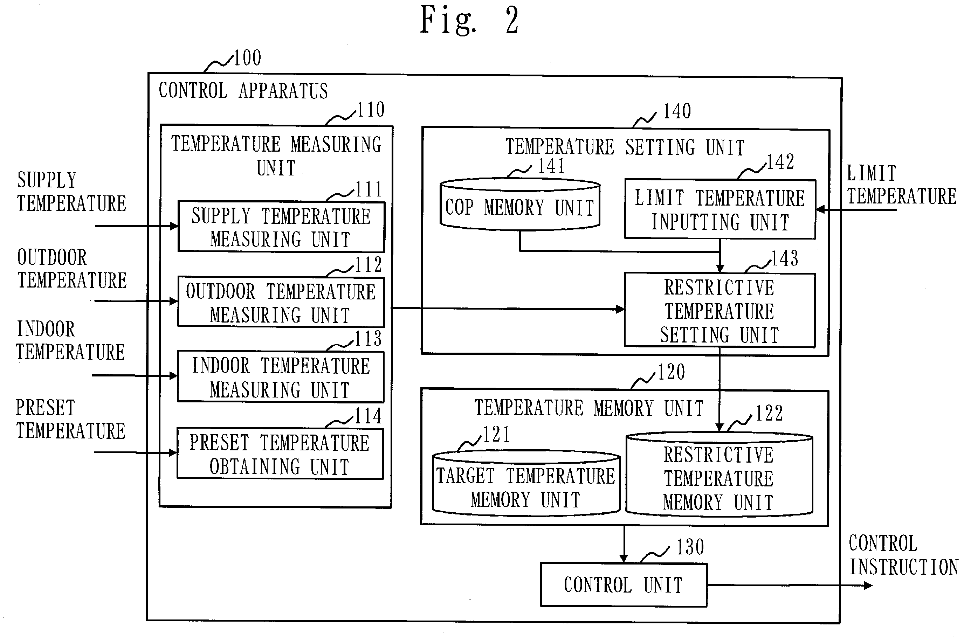

Fig. 2 shows a configuration diagram of the control apparatus 100 related to the first embodiment.

The control apparatus 100 includes a temperature measuring unit 110, a temperature memory unit 120, a control unit 130, and a temperature setting unit 140. The control unit is implemented as a central processing unit (CPU) including a RAM, ROM, etc.

The temperature measuring unit 110 measures or obtains various kinds of temperatures. The temperature measuring unit 110 includes a supply temperature measuring unit 111, an outdoor temperature measuring unit 112, an indoor temperature measuring unit 113, and a preset temperature obtaining unit 114.

The supply temperature measuring unit 111 measures a supply temperature using the temperature sensor 101. The outdoor temperature measuring unit 112 measures an outdoor temperature using the temperature sensor 102. The indoor temperature measuring unit 113 measures an indoor temperature using the temperature sensor 103. The preset temperature obtaining unit 114 obtains a preset temperature input by the remote controller 70.

The temperature memory unit 120 is a memory device storing temperatures being necessary for control by the control unit 130. The temperature memory unit 120 includes a target temperature memory unit 121 and a restrictive temperature memory unit 122.

The target temperature memory unit 121 is a memory device for storing the target temperature. The target temperature is, for instance, a predetermined temperature prescribed at the time of installing the heat pump system 200 and so on. Or, the target temperature can be calculated and set according to the heating load.

The restrictive temperature memory unit 122 is a memory device storing a temperature being higher than the target temperature as an upper restrictive temperature, and a temperature being lower than the target temperature as a lower restrictive temperature. Here, the upper restrictive temperature is set by a restrictive temperature setting unit 143 which will be discussed later, and for the lower restrictive temperature, a temperature which is lower than the target temperature with a predetermined degrees (2 degrees Celsius, for instance) is previously set.

The control unit 130 controls the heat pump apparatus 10 so that the supply temperature should become the target temperature stored in the target temperature memory unit 121. Specifically, the control unit 130 controls an operating frequency of the compressor 1 to stay between a lower limit frequency and an upper limit frequency which have been previously set, so that the supply temperature should become the target temperature, and thereby the control unit 130 operates the compressor 1. For instance, the control unit 130, if a supply temperature difference between the target temperature and the supply temperature is large, sets the operating frequency of the compressor 1 high. On the other hand, the control unit 130 sets the operating frequency of the compressor 1 low if the supply temperature difference is small.

Further, the control unit 130 stops the compressor 1 when the supply temperature is higher than the upper restrictive temperature; and after the compressor 1 stops, when the supply temperature becomes lower than the lower restrictive temperature, the control unit 130 restarts the compressor 1.

Here, if the heat quantity is not sufficient using only the heat pump apparatus 10, the control unit 130 sets the auxiliary heat source 20 to ON so that the supply temperature should become the target temperature.

The temperature setting unit 140 sets the restrictive temperature in the restrictive temperature memory unit 122. The temperature setting unit 140 includes a COP memory unit 141, a limit temperature inputting unit 142, and a restrictive temperature setting unit 143.

The COP memory unit 141 is a memory device storing values of a COP (Coefficient Of Performance) of the heat pump apparatus 10 of cases in which the outdoor temperature and the supply temperature are respectively changed.

Here, as a general rule, the higher the outdoor temperature becomes, the more COP increases; the higher the supply temperature becomes, the more the COP decreases.

The limit temperature inputting unit 142 makes a user input the limit temperature which is an upper limit of the supply temperature using the remote controller 70, etc. at the time of installing the heat pump system 200 and so on.

As for the upper limit of the supply temperature, for instance, 40 degrees Celsius is input when the floor heating is used as the heating appliance and when the temperature being higher than 40 degrees Celsius may break the floor.

The restrictive temperature setting unit 143 determines temperatures A, B, and C based on the following respective rules A to C. The restrictive temperature setting unit 143 sets the lowest temperature among the temperatures A, B, and C, which have been determined based on the respective rules, to the upper restrictive temperature.

### (Rule A)

The restrictive temperature setting unit 143 determines a temperature by which COP stored in the COP memory unit 141 becomes a predetermined value (3, for instance) as the temperature A. The COP memory unit 141 stores COPs of cases in which the outdoor temperature and the supply temperature are respectively changed. Therefore, the restrictive temperature setting unit 143, at the outdoor temperature measured by the outdoor temperature measuring unit 112, obtains a supply temperature by which the COP becomes the predetermined value, and sets the supply temperature to the temperature A.

This is to prevent a case in which the heat pump apparatus is continuously operated in exchange of decreasing the COP largely, resulting in the opposite effect of degraded efficiency

### (Rule B)

The smaller a preset temperature difference, which is a difference between the indoor temperature measured by the indoor temperature measuring unit 113 and the preset temperature obtained by the preset temperature obtaining unit 114, the lower the restrictive temperature setting unit 143 determines the temperature B. For instance, the restrictive temperature setting unit 143 previously stores the temperature B with respect to the preset temperature difference, or stores a calculation formula for calculating the temperature B from the preset temperature difference. Then, the restrictive temperature setting unit 143 determines the temperature B based on the preset temperature difference and the stored information.

This is so as not to degrade the indoor comfort. As discussed above, in the natural convection system, the correlation between the operation status of the heat pump apparatus and the indoor temperature is small. Accordingly, when the preset temperature difference is large, the increase of the supply temperature does not instantly cause the indoor temperature to reach the preset temperature. Therefore, the upper restrictive temperature can be set high. On the other hand, when the preset temperature difference is small, the increase of the supply temperature may cause the indoor temperature to reach the preset temperature. Therefore, the upper restrictive temperature cannot be set high.

### (Rule C)

The restrictive temperature setting unit 143 treats a limit temperature which the limit temperature inputting unit 142 makes the user input as the temperature C.

This is to prevent a case in which a temperature being higher than the limit temperature is set as the upper restrictive temperature, and the supply temperature may exceed the limit temperature.

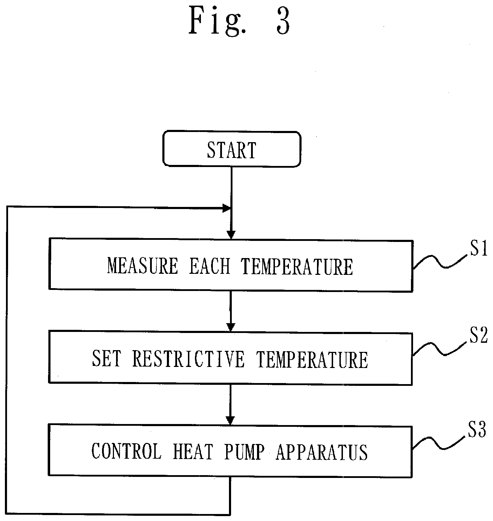

Fig. 3 is a flowchart showing a flow of a control process of the control apparatus 100 related to the first embodiment.

### (S1: Temperature measuring process)

The temperature measuring unit 110 measures each temperature.

### (S2: Restrictive temperature setting process)

The temperature setting unit 140 sets the upper restrictive temperature using each temperature measured or obtained at S1 in the restrictive temperature memory unit 122 in the above-discussed manner.

### (S3: Controlling process)

The control unit 130 controls the compressor 1 provided at the heat pump apparatus 10 using each temperature measured or obtained at S1, so that the supply temperature should become the target temperature stored in the target temperature memory unit 121.

At this time, the control unit 130 stops the compressor 1 when the supply temperature becomes higher than the upper restrictive temperature stored in the restrictive temperature setting unit 143; and after stopping the compressor 1, when the supply temperature becomes lower than the lower restrictive temperature, the control unit 130 restarts the compressor 1.

After a predetermined time has passed, the process will start from S1 again.

As discussed above, in the heat pump system 200 related to the first embodiment, the upper restrictive temperature should be set as high as possible based on the COP, the preset temperature difference and so on. By this operation, it takes time before the supply temperature exceeds the upper restrictive temperature, and thus the number of times of stopping the compressor can be reduced.

Here, the heat pump system 200 is on the premise of using the heating operation by the natural convection system, so that even if the supply temperature slightly exceeds the target temperature, the increase of the supply temperature does not instantly cause to increase the indoor temperature. Therefore, the indoor comfort is not degraded, either.

Here, the upper limit frequency and the lower limit frequency which have been explained in the above are determined at the time of shipping the product and so on according to the features of the compressor 1 or the heat pump apparatus 10.

Further, in the above explanation, three rules of Rule A to Rule C are used to determine the upper restrictive temperature. However, the rules can be, for instance, only Rules A and B, or Rules A and C. Further, if the supply temperature would never exceed the temperature of Rule A, the rules can be Rules B and C, only Rule B, or only Rule C.

Numerous additional modifications and variations are possible in light of the above teachings. It is therefore to be understood that, within the scope of the appended claims, the disclosure of this patent specification may be practiced otherwise than as specifically described herein.

### Reference Signs List

1: a compressor; 2: a heat exchanger; 3: an expansion mechanism; 4: a heat exchanger; 5: a refrigerant piping; 10: a heat pump apparatus; 20: an auxiliary heat source; 30 a heating appliance; 40: a pump; 50: a fluid piping; 60: an indoor space; 70: a remote controller; 100 a control apparatus; 101, 102, 103: temperature sensors; 110: a temperature measuring unit; 111: a supply temperature measuring unit; 112: an outdoor temperature measuring unit; 113: an indoor temperature measuring unit; 114: a preset temperature obtaining unit; 120: a temperature memory unit; 121: a target temperature memory unit; 122: a restrictive temperature memory unit; 130: a control unit; 140: a temperature setting unit; 141: a COP memory unit; 142: a limit temperature inputting unit, 143: a restrictive temperature setting unit; and 200: a heat pump system.

## Claims

1. A heat pump system (200) including a heat pump apparatus (10) having a compressor (1), for supplying fluid heated by the heat pump apparatus to a heating appliance (30), the heat pump system comprising:
an outdoor temperature measuring unit (112) for measuring an outdoor temperature;
a supply temperature measuring unit (111) for measuring a temperature of the fluid to be supplied to the heating appliance as a supply temperature; **characterized in that** the heating appliance carries out heat exchange of the fluid with air by natural convection, and
**in that** the heat pump system comprises a COP memory unit (141) for storing values of a COP (Coefficient Of Performance) of cases in which the outdoor temperature and the supply temperature are respectively changed, wherein the value of COP is associated with the outdoor temperature and the supply temperature, whereby as a general rule the higher the outdoor temperature becomes, the more the value of COP increases, and the higher the supply temperature becomes, the more the value of COP decreases;
a restrictive temperature setting unit (143) for setting a temperature A as an upper restrictive temperature which is higher than a preset target temperature and which corresponds to a supply temperature for which the COP stored by the COP memory unit has a predetermined value with respect to the outdoor temperature measured by the outdoor temperature measuring unit, and
a control unit (130) comprising a processor and for controlling an operating frequency of the compressor, so that the supply temperature measured by the supply temperature measuring unit should become the target temperature , and for temporarily stopping the compressor when the supply temperature becomes the upper restrictive temperature set by the restrictive temperature setting unit.

2. The heat pump system of claim 1,
wherein the heat pump system further comprises:
an indoor temperature measuring unit (113) for measuring a temperature of a room at which the heating appliance is provided as an indoor temperature; and
a preset temperature obtaining unit (114) for obtaining a preset temperature of the room set by a user, and
wherein the restrictive temperature setting unit sets whichever is lower between the temperature A and a temperature B as the restrictive temperature when the smaller a difference between the indoor temperature measured by the indoor temperature measuring unit and the preset temperature obtained by the preset temperature obtaining unit, the lower the restrictive temperature setting unit determines the temperature B.

3. The heat pump system of claim 2,
wherein the heat pump system further comprises a limit temperature inputting unit (142) for making a user input the limit temperature, and wherein the restrictive temperature setting unit sets whichever is lowest among the temperature A, the temperature B, and a temperature C as the restrictive temperature when the limit temperature made to input by the limit temperature inputting unit is assumed as the temperature C.

4. A control method of a heat pump apparatus (10) of a heat pump system (200) including the heat pump apparatus having a compressor (1), for supplying fluid heated by the heat pump apparatus to a heating appliance (30) which carries out heat exchange of the fluid with air by natural convection, the control method comprising:
by a temperature sensor (102), an outdoor temperature measuring process for measuring an outdoor temperature;
by a temperature sensor (101), a supply temperature measuring process for measuring a temperature of the fluid to be supplied to the heating appliance as a supply temperature;
by a control apparatus (100), a restrictive temperature setting process for reading, from a memory device for storing values of a COP (Coefficient Of Performance) of cases in which the outdoor temperature and the supply temperature are respectively changed, wherein the value of COP is associated with the outdoor temperature and the supply temperature, whereby as a general rule the higher the outdoor temperature becomes, the more the value of COP increases and the higher the supply temperature becomes, the more the value of COP decreases, a supply temperature by which the stored COP becomes a predetermined value with respect to the outdoor temperature measured by the outdoor temperature measuring process as a temperature A, and setting the temperature A as an upper restrictive temperature which is higher than a preset target temperature and which corresponds to a supply temperature for which the COP stored by the memory device has a predetermined value with respect to the measured outdoor temperature, and
by the control apparatus, a controlling process for controlling an operating frequency of the compressor, so that the supply temperature measured by the supply temperature measuring process should become a target temperature, and for temporarily stopping the compressor when the supply temperature becomes the upper restrictive temperature set by the restrictive temperature setting process.

## Patentansprüche

1. Wärmepumpensystem (200) enthaltend eine einen Kompressor (1) aufweisende Wärmepumpenvorrichtung (10), zum Liefern von durch die Wärmepumpenvorrichtung erwärmtem Fluid zu einem Heizgerät (30), wobei das Wärmepumpensystem enthält:
eine Außentemperaturmesseinheit (112) zum Messen einer Außentemperatur;
eine Vorlauftemperaturmesseinheit (111) zum Messen einer Temperatur des zum Heizgerät zu liefernden Fluids als eine Vorlauftemperatur;
**dadurch gekennzeichnet, dass** das Heizgerät einen Wärmeaustausch des Fluids mit Luft durch natürliche Konvektion durchführt, und
dass das Wärmepumpensystem
eine COP-Speichereinheit (14) zum Speichern von Werten eines COP (Leistungszahl) von Fällen, in denen die Außentemperatur und die Vorlauftemperatur jeweils geändert werden, wobei der Wert des COP mit der Außentemperatur und der Vorlauftemperatur in Zusammenhang steht, wobei im Allgemeinen gilt, dass je höher die Außentemperatur wird, desto mehr der Wert des COP steigt, und je höher die Vorlauftemperatur wird, desto mehr der Wert des COP sinkt;
eine Restriktivtemperatureinstelleinheit (143) zum Einstellen einer Temperatur A als eine obere restriktive Temperatur, die höher als eine voreingestellte Zieltemperatur ist und die einer Vorlauftemperatur entspricht, für welche der von der COP-Speichereinheit gespeicherte COP einen vorbestimmten Wert bezüglich der von der Außentemperaturmesseinheit gemessenen Außentemperatur hat, und
eine Steuereinheit (130) enthaltend einen Prozessor und zum Steuern einer Betriebsfrequenz des Kompressors, so dass die von der Vorlauftemperaturmesseinheit gemessene Vorlauftemperatur zur Zieltemperatur werden soll, und zum zeitweisen Stoppen des Kompressors, wenn die Vorlauftemperatur die von der Restriktivtemperatureinstelleinheit eingestellte obere restriktive Temperatur wird,
enthält.

2. Wärmepumpensystem gemäß Anspruch 1,
wobei das Wärmepumpensystem ferner enthält:
eine Innentemperaturmesseinheit (113) zum Messen einer Temperatur eines Raumes, in dem das Heizgerät bereitgestellt ist, als eine Innentemperatur; und
eine Voreinstelltemperaturerlangungseinheit (114) zum Erlangen einer von einem Nutzer eingestellten voreingestellten Temperatur des Raumes, und
wobei die Restriktivtemperatureinstelleinheit die niedrigere der Temperatur A und einer Temperatur B als die restriktive Temperatur einstellt, wenn je kleiner ein Unterschied zwischen der von der Innentemperaturmesseinheit gemessenen Innentemperatur und der von der Voreinstelltemperaturerlangungseinheit erlangten voreingestellten Temperatur, desto niedriger die Restriktivtemperatureinstelleinheit die Temperatur B bestimmt.

3. Wärmepumpensystem gemäß Anspruch 2,
wobei das Wärmepumpensystem ferner eine Grenztemperatureingabeeinheit (142) zum Veranlassen eines Nutzers zur Eingabe einer Grenztemperatur enthält, und wobei die Restriktivtemperatureinstellungseinheit die niedrigste der Temperatur A, der Temperatur B und einer Temperatur C als die restriktive Temperatur einstellt, wenn die Grenztemperatur, die von der Grenztemperatureingabeeinheit veranlasst wurde einzugeben, als die Temperatur C angenommen wird.

4. Steuerverfahren einer Wärmepumpenvorrichtung (10) eines Wärmepumpensystems (200) enthaltend die einen Kompressor (1) aufweisende Wärmepumpenvorrichtung, zum Liefern von durch die Wärmepumpenvorrichtung erwärmtem Fluid zu einem Heizgerät (30), welches einen Wärmeaustausch des Fluids mit Luft durch natürliche Konvektion durchführt, wobei das Steuerverfahren umfasst:
durch einen Temperatursensor (102), ein Außentemperaturmessverfahren zum Messen einer Außentemperatur;
durch einen Temperatursensor (101), ein Vorlauftemperaturmessverfahren zum Messen einer Temperatur des zum Heizgerät zu liefernden Fluids als eine Vorlauftemperatur;
durch eine Steuervorrichtung (100), ein Restriktivtemperatureinstellungsverfahren zum Lesen, aus einer Speichervorrichtung zum Speichern von Werten eines COP (Leistungszahl) von Fällen, in denen die Außentemperatur und die Vorlauftemperatur jeweils geändert werden, wobei der Wert des COP mit der Außentemperatur und der Vorlauftemperatur in Zusammenhang steht, wobei im Allgemeinen gilt, dass je höher die Außentemperatur wird, desto mehr der Wert des COP steigt, und je höher die Vorlauftemperatur wird, desto mehr der Wert des COP sinkt, einer Vorlauftemperatur, wodurch der gespeicherte COP ein vorbestimmter Wert bezüglich der durch das Außentemperaturmessverfahren als Temperatur A gemessenen Außentemperatur wird, und Einstellen der Temperatur A als eine obere restriktive Temperatur, die höher als eine voreingestellte Zieltemperatur ist und die einer Vorlauftemperatur entspricht, für welche der von der Speichervorrichtung gespeicherte COP einen vorbestimmten Wert bezüglich der gemessenen Außentemperatur hat, und
durch eine Steuervorrichtung, ein Steuerverfahren zum Steuern einer Betriebsfrequenz des Kompressors, so dass die durch das Vorlauftemperaturmessverfahren gemessene Vorlauftemperatur zur Zieltemperatur werden soll, und zum zeitweisen Stoppen des Kompressors, wenn die Vorlauftemperatur die durch das Restriktivtemperatureinstellverfahren eingestellte obere restriktive Temperatur wird.

## Revendications

1. Système de pompe à chaleur (200) comprenant un appareil de pompe à chaleur (10) qui présente un compresseur (1), destiné à fournir un fluide chauffé par l'appareil de pompe à chaleur à un appareil de chauffage (30), le système de pompe à chaleur comprenant :
une unité de mesure de la température extérieure (112) destinée à mesurer la température extérieure ;
une unité de mesure de la température d'approvisionnement (111) destinée à mesurer la température du fluide à fournir à l'appareil de chauffage en tant que température d'approvisionnement ;
**caractérisé en ce que** l'appareil de chauffage exécute un échange de chaleur entre le fluide et l'air grâce à une convection naturelle ; et
**en ce que** le système de pompe à chaleur comprend une unité de mémorisation de COP (141) destinée à stocker des valeurs de COP (coefficient de performance) dans les cas où la température extérieure et la température d'approvisionnement sont respectivement changées, dans lequel la valeur de COP est associée à la température extérieure et à la température d'approvisionnement, grâce à quoi, en règle générale, plus la température extérieure est élevée, plus la valeur de COP augmente, et plus la température d'approvisionnement est élevée, plus la valeur de COP diminue ;
une unité de réglage de la température de restriction (143) destinée à régler une température A en tant que température de restriction supérieure qui est plus élevée qu'une température cible préréglée, et qui correspond à une température d'approvisionnement pour laquelle le COP stocké par l'unité de mémorisation de COP présente une valeur prédéterminée par rapport à la température extérieure mesurée par l'unité de mesure de la température extérieure ; et
une unité de commande (130) qui comprend un processeur et qui est destinée à commander la fréquence de fonctionnement du compresseur, de telle sorte que la température d'approvisionnement mesurée par l'unité de mesure de la température d'approvisionnement puisse devenir la température cible, et à arrêter de manière temporaire le compresseur lorsque la température d'approvisionnement devient égale à la température de restriction supérieure réglée par l'unité de réglage de la température de restriction.

2. Système de pompe à chaleur selon la revendication 1,
dans lequel le système de pompe à chaleur comprend en outre :
une unité de mesure de la température intérieure (113) destinée à mesurer la température d'une pièce où est disposé l'appareil de chauffage, en tant que température intérieure ; et
une unité d'obtention de la température préréglée (114) destinée à obtenir une température préréglée de la pièce fixée par un utilisateur ; et
dans lequel l'unité de réglage de la température de restriction fixe celle de la température A et de la température B qui est la plus petite en tant que température de restriction lorsque, plus la différence entre la température intérieure mesurée par l'unité de mesure de la température intérieure et la température préréglée obtenue par l'unité d'obtention de la température préréglée, est petite, plus l'unité de réglage de la température de restriction détermine la température B petite.

3. Système de pompe à chaleur selon la revendication 2,
dans lequel le système de pompe à chaleur comprend en outre une unité d'entrée de la température limite (142) destinée à faire entrer par un utilisateur la température limite, et dans lequel l'unité de réglage de la température de restriction fixe laquelle est la plus petite parmi la température A, la température B, et une température C en tant que température de restriction lorsque la température limite entrée par l'unité d'entrée de la température limite est prise en tant que température C.

4. Procédé de commande d'un appareil de pompe à chaleur (10) d'un système de pompe à chaleur (200) qui comprend l'appareil de pompe à chaleur qui présente un compresseur (1), destiné à fournir le fluide chauffé par l'appareil de pompe à chaleur à un appareil de chauffage (30) qui exécute un échange de chaleur entre le fluide et l'air grâce à une convection naturelle, le procédé de commande comprenant :
un processus de mesure de la température extérieure, à l'aide d'un capteur de température (102), destiné à mesurer la température extérieure ;
un processus de mesure de la température d'approvisionnement, à l'aide d'un capteur de température (101), destiné à mesurer la température du fluide à fournir à l'appareil de chauffage en tant que température d'approvisionnement ;
un processus de réglage de la température de restriction, à l'aide d'un appareil de commande (100), destiné à lire, à partir d'un dispositif de mémoire destiné à stocker des valeurs de COP (coefficient de performance) dans les cas où la température extérieure et la température d'approvisionnement sont respectivement changées, dans lequel la valeur de COP est associée à la température extérieure et à la température d'approvisionnement, grâce à quoi, en règle générale, plus la température extérieure augmente, plus la valeur de COP augmente, et plus la température d'approvisionnement augmente, plus la valeur de COP diminue, une température d'approvisionnement grâce à laquelle le COP stocké devient une valeur prédéterminée par rapport à la température extérieure mesurée par le processus de mesure de la température extérieure en tant que température A, et à régler la température A en tant que température de restriction supérieure qui est plus élevée qu'une température cible préréglée et qui correspond à une température d'approvisionnement pour laquelle le COP stocké par le dispositif de mémoire présente une valeur prédéterminée par rapport à la température extérieure mesurée ; et
un processus de commande destiné à commander, à l'aide de l'appareil de commande, la fréquence de fonctionnement du compresseur, de telle sorte que la température d'approvisionnement mesurée par le processus de mesure de la température d'approvisionnement puisse devenir une température cible, et à arrêter de manière temporaire le compresseur lorsque la température d'approvisionnement devient égale à la température de restriction supérieure réglée par le processus de réglage de la température de restriction.
